(19) Europäisches Patentamt
European Patent Office
Office européen des brevets

(11) EP 2 527 025 A1

(12) EUROPÄISCHE PATENTANMELDUNG

(43) Veröffentlichungstag:
28.11.2012 Patentblatt 2012/48

(51) Int Cl.:
B01D 46/10 (2006.01)      B01D 46/00 (2006.01)

(21) Anmeldenummer: 12169632.2

(22) Anmeldetag: 25.05.2012

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 26.05.2011 DE 102011102792

(71) Anmelder: LTG AEROB® Filtration Solutions
GmbH
71336 Waiblingen (DE)

(72) Erfinder: Bauer, Volker
71120 Grafenau (DE)

(74) Vertreter: Witte, Weller & Partner
Postfach 10 54 62
70047 Stuttgart (DE)

(54) **Abscheidungsvorrichtung zum Abscheiden von Staub**

(57) Die vorliegende Erfindung betrifft eine Abscheidungsvorrichtung (10) zum Abscheiden von Staub aus einem Fluid (44), mit einem Gehäuse (16), das einen stromaufwärts gelegenen Einlass (12) und einen stromabwärts gelegenen Auslass (14) für das Fluid (44) aufweist, und mit einem Filterelement (54), das in dem Gehäuse (16) derart angeordnet ist, dass das von dem Einlass (12) zu dem Auslass (14) strömende Fluid (44) das Filterelement (54) durchströmt. Des Weiteren ist das Filterelement (54) als ein metallisches Sieb ausgebildet, wobei die Abscheidungsvorrichtung (10) eine stromaufwärts des Filterelements (54) angeordnete Absaugeinrichtung (58) zum Absaugen von Staub von dem Filterelement (54) aufweist, und wobei das Filterelement (54) und die Absaugeinrichtung (58) relativ zueinander bewegbar in dem Gehäuse (16) angeordnet sind. Des Weiteren betrifft die vorliegende Erfindung ein Verfahren zum Abscheiden von Staub aus einem Fluid (44).

Fig.2

EP 2 527 025 A1

# Beschreibung

Die vorliegende Erfindung betrifft eine Abscheidungsvorrichtung zum Abscheiden von Staub aus einem Fluid, mit einem Gehäuse, das einen stromaufwärts gelegenen Einlass und einen stromabwärts gelegenen Auslass für das Fluid aufweist, und einem Filterelement, das in dem Gehäuse derart angeordnet ist, dass das von dem Einlass zu dem Auslass strömende Fluid das Filterelement durchströmt.

Des Weiteren betrifft die vorliegende Erfindung ein Verfahren zum Abscheiden von Staub aus einem Fluid, bei dem das Fluid von einem stromaufwärts gelegenen Einlass eines Gehäuses einer Abscheidungsvorrichtung zu einem stromabwärts gelegenen Auslass unter Durchströmung eines Filterelements strömt.

Derartige Abscheidungsvorrichtungen oder Abscheider werden im Stand der Technik weit verbreitet dazu verwendet, beispielsweise aus Verbrennungsvorgängen mit Sekundärbrennstoffen, etwa Biomasse, Holzhackschnitzel, usw., entstehende Feststoffpartikel aus den jeweiligen Abgasen des Verbrennungsvorgangs abzuscheiden. Derartige Abscheidungsvorrichtungen finden immer größere Verbreitung, insbesondere im Einsatz in Kleinstverbrennungsanlagen zur Verbrennung von Holz- und Biomasse. Um eine Beladung eines Gases mit Staub oder anderen Feststoffen mittels einer solchen Abscheidungsvorrichtung herabzusetzen, wird ein Filterelement verwendet, das von dem Gas durchströmt wird und auf dem sich die Staub- bzw. Feststoffpartikel absetzen. Ein solches Filterelement besteht in der Regel aus einem temperaturbeständigen Textil, zum Beispiel Teflon, welches auf einen Stützkorb aufgezogen ist.

Dabei setzt sich das Filterelement nach und nach mit dem Staub bzw. den Feststoffpartikeln zu. Dies macht eine Reinigung bzw. einen Austausch des Filterelements in bestimmten betriebsabhängigen Intervallen notwendig. Eine Reinigung erfolgt beispielsweise, indem die mit den Feststoffpartikeln zugesetzte Oberfläche des Filterelements mit Druckluft abgespült wird, so dass sich die Feststoffpartikel von der Oberfläche lösen. Ein Austauschen des Filterelements, bei dem dieses entnommen wird, macht ein Abschalten der Abscheidungsvorrichtung notwendig, so dass ein Betrieb der Abscheidungsvorrichtung während der Wartungsarbeiten nicht möglich ist.

Eine Aufgabe der vorliegenden Erfindung liegt daher darin, die eingangs genannte Abscheidungsvorrichtung derart weiterzubilden, dass eine Reinigung des Filterelements während des Betriebs erfolgen kann und damit ein kontinuierlicher Betrieb der Abscheidungsvorrichtung über längere Zeiträume bei minimaler Filterfläche ermöglicht ist.

Gemäß einem ersten Aspekt der Erfindung wird daher vorgeschlagen, die eingangs genannte Abscheidungsvorrichtung derart weiterzubilden, dass das Filterelement als ein metallisches Sieb ausgebildet ist, und die Abscheidungsvorrichtung des Weiteren eine stromaufwärts des Filterelements, d.h. von dem Filterelement aus betrachtet in Richtung des Einlasses, angeordnete Absaugeinrichtung zum Absaugen von Staub von dem Filterelement aufweist, wobei das Filterelement und die Absaugeinrichtung relativ zueinander bewegbar in dem Gehäuse angeordnet sind.

Unter dem Begriff "Staub" sind im Rahmen der vorliegenden Beschreibung jedwede in einem Fluid verteilten Feststoffpartikel zu verstehen. Insbesondere kann es sich bei dem Staub um bei einem Verbrennungsvorgang von Biomasse oder Holzhackschnitzel entstehende Feststoffpartikel handeln.

Unter dem Begriff "Fluid" wird im Rahmen der vorliegenden Beschreibung gemäß der üblichen Terminologie der Strömungslehre jedes Gas oder jede Flüssigkeit oder Dampfmischformen davon verstanden. Insbesondere handelt es sich bei dem Fluid um ein bei einem Verbrennungsvorgang von Biomasse oder Holzhackschnitzeln entstehendes Gas.

Es wird also vorgeschlagen, eine Absaugeinrichtung stromaufwärts des Filterelements anzuordnen, um den Staub entgegen der Durchströmrichtung des Filterelements aus dem Filterelement herauszusaugen. Dabei muss die gesamte Strömungsquerschnittsfläche des Filterelements gereinigt werden. Andererseits bedingt die Anordnung der Absaugeinrichtung stromaufwärts des Filterelements, dass dieses im Strömungsquerschnitt angeordnet wird, so dass die Absaugeinrichtung ein Strömungshindernis darstellt. Es ist also nicht möglich, die gesamte Fläche des Filterelements mit der Absaugeinrichtung zu bedecken, da ansonsten die Absaugeinrichtung eine Durchströmung des Filterelements verhindern würde. Das Filterelement ist als ein, insbesondere starres, metallisches Sieb ausgebildet. Insbesondere kann es sich um ein mehrlagiges metallisches Sieb handeln, bei dem die Lagen fest miteinander verbunden sind. Ein solches metallisches Sieb kann insbesondere mittels eines Sinterverfahrens hergestellt sein. Geeignete Filterelemente können beispielsweise von der Firma Spörl KG, 72517 Sigmaringendorf, Deutschland bezogen werden und werden von der Spörl KG unter den Namen "Poremet", "Absolta", "Poreflo" oder "Topmesh" vertrieben. Der Begriff "stromaufwärts" bezeichnet dabei einen von dem Filterelement aus betrachtet in Richtung des Einlasses des mit Feststoffpartikeln beladenen Fluids gelegenen Bereich der Abscheidungsvorrichtung. Der Begriff "stromabwärts" bezeichnet dabei einen von dem Filterelement aus betrachtet in Richtung des Auslasses des mittels des Filterelements nun gereinigten Fluids gelegenen Bereich der Abscheidungsvorrichtung.

Daher wird vorgeschlagen, das Filterelement und die Absaugeinrichtung relativ zu einander bewegbar in dem Gehäuse anzuordnen. Auf diese Weise wird es möglich, dass die Absaugeinrichtung derart angeordnet werden kann, dass sie nur einen geringen Anteil des Strömungsquerschnitts des Filterelements bedeckt. Durch die relative Bewegung des Filterelements und der Absaugeinrichtung zueinander kann jedoch trotzdem die gesamte Querschnittsfläche des Filterelements von der Absaugeinrichtung überstrichen werden und das Filterelement so vollständig gereinigt werden.

Auf diese Weise wird eine Reinigung des Filterelements während des Betriebs möglich. Insbesondere kann ein kontinuierliches Absaugen des Filterelements erfolgen. Auf diese Weise wird das Filterelement kontinuierlich während des Betriebs gereinigt. Ein Abschalten der Abscheidungsvorrichtung zum Reinigen des Filterelements bzw. zum Wechseln des Filterelements ist nicht mehr notwendig. Ein kontinuierlicher Betrieb der Abscheidungsvorrichtung wird ermöglicht.

Gemäß einem zweiten Aspekt der Erfindung wird vorgeschlagen, das eingangs genannte Verfahren derart weiterzubilden, dass sich eine stromaufwärts des Filterelements angeordnete Absaugeinrichtung und das Filterelement relativ zueinander bewegen, wobei die Absaugeinrichtung den Staub von dem Filterelement absaugt.

Das vorgeschlagene Verfahren weist daher dieselben Vorteile wie die vorgeschlagene Abscheidungsvorrichtung gemäß dem ersten Aspekt auf.

Die eingangs gestellte Aufgabe wird somit vollkommen gelöst.

In einer Ausgestaltung der Abscheidungsvorrichtung gemäß dem ersten Aspekt wird vorgeschlagen, dass sich das Gehäuse entlang einer Längsachse erstreckt, wobei das Filterelement die Form einer kreisförmigen Scheibe aufweist und sich quer zu der Längsachse, insbesondere senkrecht zu der Längsachse, erstreckt, wobei das Fluid das Filterelement parallel zu der Längsachse durchströmt, und wobei die Absaugeinrichtung die Form eines sich quer zu der Längsachse, insbesondere senkrecht zu der Längsachse, erstreckenden Rohres aufweist.

Auf diese Weise werden besonders vorteilhafte Geometrien bereitgestellt. Für das Filterelement ergibt sich ein kreisförmiger Strömungsquerschnitt, wodurch bei minimaler Filterfläche eine maximale Reinigungswirkung erzielt werden kann. Die in der Form eines Stabelements ausgebildete Absaugeinrichtung erstreckt sich dann in radialer Richtung des Kreisquerschnitts, so dass durch eine relative Rotationsbewegung der Absaugeinrichtung und des Filterelements zueinander ein vollständiges Überstreichen des kreisförmigen Strömungsquerschnitts des Filterelements durch die Absaugeinrichtung möglich ist.

In einer weiteren Ausgestaltung der Abscheidungsvorrichtung gemäß dem ersten Aspekt kann vorgesehen sein, dass sich das Gehäuse entlang einer Längsachse erstreckt, wobei das Fluid das Filterelement parallel zur Längsachse durchströmt, und dass die Absaugeinrichtung ortsfest angeordnet ist, wobei das Filterelement um die Längsachse rotierbar gelagert ist.

Auf diese Weise wird auf vorteilhafte Weise die Relativbewegung zwischen der Absaugeinrichtung und dem Filterelement bereitgestellt. Da die Absaugeinrichtung naturgemäß durch das Gehäuse der Abscheidungsvorrichtung geführt sein muss, um den abgesaugten Staub abzutransportieren, wäre ein mechanisch relativ aufwändige Konstruktion notwendig, um die Absaugeinrichtung und entsprechende Staubführungskanäle derart bewegbar auszugestalten, dass sie das gesamte Filterelement überstreichen können. Grundsätzlich ist eine solche Ausgestaltung möglich. Konstruktiv deutlich günstiger ist es jedoch, das Filterelement um die Längsachse rotierbar zu lagern. Die Absaugeinrichtung kann dann fest angeordnet sein und erstreckt sich bezüglich der Längsachse in radialer Richtung. Das Filterelement rotiert so an der fest angeordneten Absaugeinrichtung vorbei und wird von dieser kontinuierlich abgesaugt.

In einer weiteren Ausgestaltung der Abscheidungsvorrichtung gemäß dem ersten Aspekt kann vorgesehen sein, dass die Absaugeinrichtung des Weiteren ein an der Absaugeinrichtung befestigtes Bürstenelement mit einem freien Ende aufweist, wobei das freie Ende des Bürstenelements auf dem Filterelement aufliegt.

Das Bürstenelement ist also mit einem Ende an der Absaugeinrichtung befestigt. Ein diesem Ende entgegengesetztes freies Ende liegt auf dem Filterelement auf. Das freie Ende berührt also das Filterelement. Durch die Relativbewegung zwischen dem Filterelement und der Absaugeinrichtung kann mittels des Bürstenelements so zusätzlich eine mechanische Reinigung erfolgen. Häufig kommt es vor, dass innerhalb des Fluids der Taupunkt durchschritten wird oder es zu Kondensation kommt, so dass der Filterkuchen verklebt bzw. feuchte Anbackungen auf dem Filterelement aufliegen. So bildet sich zunehmend auf dem Filterelement ein Belag. Mittels des Bürstenelements wird dieser jedoch kontinuierlich mechanisch aufgeraut bzw. abgetragen.

In einer weiteren Ausgestaltung der Abscheidungsvorrichtung gemäß dem ersten Aspekt ist vorgesehen, dass stromabwärts des Filterelements und gegenüberliegend der Absaugeinrichtung ein Düsenelement zum Düsen eines weiteren Fluids durch das Filterelement in Richtung der Absaugeinrichtung angeordnet ist.

Stromabwärts des Filterelements ist somit ein Düsenelement angeordnet. Dieses liegt der Absaugeinrichtung gegenüber. Das bedeutet, dass mit Blick in Strömungsrichtung, das heißt parallel zu der Längsachse der Abscheidungsvorrichtung, sich die Absaugeinrichtung und das Düsenelement überdecken. Ein aus dem Düsenelement austretender Strahl des weiteren Fluids ist somit auf das Filterelement und die, von dem Düsenelement aus gesehen, hinter dem Filterelement angeordnete Absaugeinrichtung gerichtet. Das aus dem Düsenelement austretende weitere Fluid wird entgegen der Strömungsrichtung des Fluids durch das Filterelement in Richtung der Absaugeinrichtung gedüst. Mittels des Düsenelements wird es somit möglich, einen weiteren Fluidstrom entgegen der Strömungsrichtung des Fluids durch das Filterelement zu leiten und so die zugesetzten Poren des Filterelements effektiv zu reinigen. Der Strom des weiteren Fluids aus dem Düsenelement kann dabei kontinuierlich geschaltet sein. Er kann jedoch auch getaktet über bestimmte Zeitintervalle oder auch in kurzen Impulsen bestimmter Frequenz auf das Filterelement beaufschlagt werden.

Unter dem "weiteren Fluid" wird im Rahmen der vorliegenden Beschreibung das durch das Düsenelement eingedüste Fluid verstanden. Auch bei dem weiteren Fluid kann es sich um Gas oder eine Flüssigkeit oder Dampfmischformen davon handeln. Das weitere Fluid kann ein anderes Fluid als das von dem Einlass des Gehäuses zum dem Auslass des Gehäuses strömende Fluid sein. Insbesondere kann es sich bei dem weiteren Fluid um Umgebungsluft handeln. Grundsätzlich ist es jedoch auch möglich, dass als weiteres Fluid ein inertes Gas, beispielsweise Stickstoff, eingedüst wird, um chemische Reaktionen zwischen dem weiteren Fluid und dem Fluid zu vermeiden.

In einer weiteren Ausgestaltung der Abscheidungsvorrichtung gemäß dem ersten Aspekt kann vorgesehen sein, dass die Abscheidungsvorrichtung ein Sensorsystem zur Bestimmung einer Druckdifferenz aufweist, das einen ersten Sensor zur Bestimmung eines statischen Drucks stromaufwärts des Filterelements und einen zweiten Sensor zur Bestimmung eines statischen Drucks stromabwärts des Filterelements aufweist.

So kann eine Druckdifferenz $\Delta p = p_1 - p_2$ bestimmt werden, wobei $p_1$ der mit dem ersten Sensor gemessene statische Druck stromaufwärts des Filterelements und $p_2$ der mit dem zweiten Sensor gemessene statische Druck stromabwärts des Filterelements ist. Bei angenommener konstanter mittlerer Geschwindigkeit v im Strömungsquerschnitt und gegebener Dichte p des Fluids kann mittels der auf diese Weise gemessenen Druckdifferenz $\Delta p$ des statischen Drucks der Widerstandsbeiwert $\zeta = \dfrac{\Delta p}{\dfrac{\rho}{2} \cdot v^2}$ für den durchströmten Filter bestimmt werden. Die Druckdifferenz $\Delta p$ verläuft somit proportional zu diesem Widerstandsbeiwert. Der Verlauf der Druckdifferenz der statischen Drücke vor und hinter dem Filterelement über der Zeit lässt somit erkennen, welchen Strömungswiderstand das Filterelement darstellt. Steigt die Druckdifferenz mit der Zeit an, ist dies ein Indiz dafür, dass das Filterelement zunehmend verunreinigt ist, da das Fluid schlechter durch das Filterelement hindurchtreten kann und sich somit der durch das Filterelement hervorgerufene Strömungswiderstand erhöht. Somit wird es möglich, mittels des Sensorsystems den Verunreinigungsgrad des Filterelements zu überwachen.

Des Weiteren kann bei der Abscheidungsvorrichtung gemäß dem ersten Aspekt der Erfindung vorgesehen sein, dass die Abscheidungsvorrichtung eine Regelungsvorrichtung aufweist, die derart ausgebildet ist, dass sie bei Überschreitung eines vordefinierten ersten Schwellwerts für die Druckdifferenz das weitere Fluid mittels des Düsenelements durch das Filterelement düst.

Das Düsen des weiteren Fluids durch das Filterelement verbraucht Energie. Um die Abscheidungsvorrichtung aber möglichst energieeffizient zu betreiben, sollte das Düsenelement nur dann hinzugeschaltet werden, wenn der Verunreinigungsgrad des Filterelements dies veranlasst. Somit kann mittels des Sensorsystems über die Druckdifferenz der Verunreinigungsgrad des Filters von der Regelungseinrichtung überwacht werden und bei Überschreiten eines bestimmten vordefinierten ersten Schwellwerts das Düsenelement hinzugeschaltet werden. Das Düsenelement kann dann etwa über einen gewissen Zeitraum arbeiten und wird dann abgeschaltet. Es kann aber auch vorgesehen sein, dass erst bei Unterschreitung eines weiteren bestimmten Schwellwerts das Düsenelement abgeschaltet wird. Dieser weitere Schwellwert kann von dem vordefinierten Schwellwert zum Einschalten des Düsenelements abweichen, etwa derart, dass sich eine Hysterese-Schaltung ergibt.

In einer weiteren Ausgestaltung der Abscheidungsvorrichtung gemäß dem ersten Aspekt kann vorgesehen sein, dass die Regelungseinrichtung derart ausgebildet ist, dass sie das weitere Fluid gepulst mittels des Düsenelements durch das Filterelement düst.

Wie voranstehend ausgeführt wurde, stellt ein gepulstes oder intermittierendes Düsen eine Möglichkeit der Beaufschlagung des Filterelements mit dem weiteren Fluid dar. Es hat sich gezeigt, dass hierdurch eine besonders gute Reinigungswirkung erzielt werden kann.

In einer weiteren Ausgestaltung der Abscheidungsvorrichtung gemäß dem ersten Aspekt kann vorgesehen sein, dass sich an den Einlass ein Umlenkungsabschnitt anschließt, der derart ausgebildet ist, dass er eine Richtungsänderung des ihn durchströmenden Fluids erzwingt, und dass sich ein entfernbarer Staubkübel an den Umlenkungsabschnitt anschließt.

Mittels eines solchen Umlenkungsabschnitts kann bereits eine Vorabscheidung eines Anteils des Staubs erfolgen. Durch die Umlenkung des Fluids können aufgrund der Trägheit der Feststoffpartikel bereits Feststoffpartikel mit relativ großer Masse abgeschieden werden und sammeln sich in dem Staubkübel. Dieser kann dann von einem Nutzer in bestimmten Zeitabständen manuell entfernt und entleert werden. Der Betrieb der Abscheidungsvorrichtung wird durch das Entfernen des Staubkübels nicht beeinflusst.

In einer Ausgestaltung der Abscheidungsvorrichtung gemäß dem ersten Aspekt kann vorgesehen sein, dass die Richtungsänderung 180° beträgt, wobei eine Richtung, in der das Fluid aus dem Einlass in das Gehäuse einströmt, entgegengesetzt zu einer Richtung verläuft, in der das Fluid durch das Filterelement strömt.

Mittels der Umlenkung um 180° kann ein besonders gutes Abscheiden von Staub aufgrund der Trägheitswirkung erzielt werden. Durch das Anordnen des Einlasses derart, dass das Fluid entgegengesetzt zu einer Durchströmungsrichtung des Filters in das Gehäuse einströmt, wird auf besonders einfache Weise eine 180°-Umlenkung des Fluids erzwungen.

In einer Ausgestaltung der Abscheidungsvorrichtung gemäß dem ersten Aspekt kann vorgesehen sein, dass die Abscheidungsvorrichtung eine stromaufwärts des Filterelements angeordnete Bypass-Öffnung aufweist.

Mittels der Bypass-Öffnung ist es möglich, in einer Notfallsituation den Druck stromaufwärts des Filterelements herabzusetzen und Beschädigungen der Abscheidungsvorrichtung oder eine Gefährdung für Nutzer zu vermeiden.

In einer Ausgestaltung der Abscheidungsvorrichtung gemäß dem ersten Aspekt kann vorgesehen sein, dass die Abscheidungsvorrichtung eine Regelungseinrichtung aufweist, die die Bypass-Öffnung bei Überschreitung eines vordefinierten zweiten Schwellwerts für die Druckdifferenz öffnet.

Auf diese Weise ist sichergestellt, dass bei ansteigendem Druck stromaufwärts des Filterelements, das heißt in einem so genannten Rohgasbereich, die Bypass-Öffnung automatisch geöffnet wird und so ein weiteres Ansteigen des Drucks verhindert werden kann.

In einer Ausgestaltung der Abscheidungsvorrichtung gemäß dem ersten Aspekt ist vorgesehen, dass die Abscheidungsvorrichtung derart ausgebildet ist, dass das Fluid das Filterelement während des Betriebs in vertikaler Richtung durchströmt.

Auf diese Weise kann die Abscheidungsvorrichtung derart aufgebaut sein, dass sie nur eine geringe Standfläche einnimmt. Auf diese Weise wird der Platzbedarf für die Abscheidungsvorrichtung herabgesetzt und die Anwendung auch in Umgebungen mit wenig Freiraum, beispielsweise in Einfamilienhäusern, ermöglicht.

In einer Ausgestaltung der Abscheidungsvorrichtung gemäß dem ersten Aspekt kann vorgesehen sein, dass das Filterelement ein, insbesondere stromaufwärts aufgesetztes, Ventilatorelement aufweist. Mit einem solchen Ventilatorelement kann gleichzeitig in der Abscheidungsvorrichtung eine Fluidpumpe bereitgestellt werden. Eine freie Pressung, also der im Betrieb durch den Ventilator erzielbare Druckunterschied, kann bei etwa 1.500 Pa, also etwa 15 mbar liegen.

In einem Ausführungsbeispiel bei einer zu verarbeitenden Luftmenge von 400 Bm$^3$/h, das heißt Kubikmetern pro Stunde bei Betriebsdruck, kann eine Strömungsquerschnittsfläche des Filterelements etwa 0,11 m$^2$ betragen, bei einer Anströmgeschwindigkeit des Filterelements von v = 1 m/s. Bei einer Luftmenge von etwa 1.600 Bm$^3$/h kann die Strömungsquerschnittsfläche des Filterelements etwa 0,44 m$^2$ bei einer Anströmgeschwindigkeit von v = 1 m/s betragen. Die Eintrittsbeladung des Fluids bzw. des Rohgases kann dann bei etwa maximal 150 mg/m$^3$ liegen. Mit der vorgeschlagenen Abscheidungsvorrichtung kann eine Beladung des austretenden Fluids, das heißt des Reingases von etwa maximal 20 mg/m$^3$ erzielt werden. Der Druckverlust über einem üblichen, als Metallfilter ausgebildeten Filterelement liegt bei etwa 1 mbar. Eine Drehzahl des Filterelements kann dann derart eingestellt werden, dass sich ein Druckverlust über dem Filterelement von 4 mbar einstellt. Ein erster Schwellwert, ab dem das Düsenelement geschaltet wird, kann dann auf 6 mbar festgesetzt werden. Ein zweiter Schwellwert, bei dem die Bypass-Öffnung geschaltet wird, kann dann auf 12 mbar festgesetzt werden.

Neben der voranstehend beschriebenen vertikalen Ausrichtung der Längsachse der Abscheidungsvorrichtung kann die Abscheidungsvorrichtung grundsätzlich auch horizontal betrieben werden, das heißt, eine Längsachse der Abscheidungsvorrichtung bzw. eine Durchströmungsrichtung des Filterelements ist dann horizontal ausgerichtet.

In einer weiteren Ausgestaltung des Verfahrens gemäß dem zweiten Aspekt ist vorgesehen, dass mittels eines Sensorsystems eine Druckdifferenz zwischen einem statischen Druck stromaufwärts des Filterelements und einem statischen Druck stromabwärts des Filterelements bestimmt wird, und dass mittels eines stromabwärts des Filterelements und gegenüberliegend der Absaugeinrichtung angeordneten Düsenelements ein weiteres Fluid durch das Filterelement in Richtung der Absaugeinrichtung gedüst wird, wenn die Druckdifferenz einen vordefinierten ersten Schwellwert überschreitet.

In einer weiteren Ausgestaltung des Verfahrens gemäß dem zweiten Aspekt kann darüber hinaus vorgesehen sein, dass, wenn die Druckdifferenz einen vordefinierten zweiten Schwellwert überschreitet, eine stromaufwärts des Filterelements angeordnete Bypass-Öffnung geöffnet wird.

Auch bei dem Verfahren gemäß dem zweiten Aspekt der Erfindung kann selbstverständlich vorgesehen sein, dass die Absaugeinrichtung ortsfest gehalten wird und das Filterelement um eine Längsachse der Abscheidungsvorrichtung rotiert wird. Des Weiteren kann ebenfalls vorgesehen sein, dass das Filterelement mittels eines an der Absaugeinrichtung befestigten Bürstenelements mechanisch gereinigt wird, dessen freie Enden auf dem Filterelement aufliegen. Des Weiteren kann auch bei dem Verfahren gemäß dem zweiten Aspekt der Erfindung vorgesehen sein, dass das weitere Fluid gepulst mittels des Düsenelements durch das Filterelement gedüst wird. Auch kann ein Verfahren gemäß dem zweiten Aspekt der Erfindung vorgesehen sein, das das durch den Einlass in das Gehäuse eintretende Fluid zunächst durch einen Umlenkungsabschnitt geleitet wird, wobei das Fluid in dem Umlenkungsabschnitt eine Richtungsänderung erfährt. Die Richtungsänderung kann insbesondere 180° betragen. Dabei kann das Fluid entgegengesetzt zu einer Durchströmungsrichtung des Filterelements in das Gehäuse eingeleitet werden.

Sowohl bei der Abscheidungsvorrichtung gemäß dem ersten Aspekt der Erfindung als auch bei dem Verfahren gemäß dem zweiten Aspekt der Erfindung kann vorgesehen sein, dass das durch die Bypass-Öffnung geleitete Fluid in die Umgebung ausgelassen wird. Alternativ kann vorgesehen sein, dass das durch die Bypass-Öffnung geleitete Fluid stromabwärts des Filterelements wieder in das Gehäuse eingeleitet wird.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1    eine schematische Perspektivansicht einer Abscheidungsvorrichtung,

Fig. 2    eine schematische Querschnittsansicht der Abscheidungsvorrichtung in Fig. 1,

Fig. 3    eine schematische Querschnittsansicht einer weiteren Ausführungsform einer Abscheidungsvorrichtung,

Fig. 4a    eine schematische Querschnittsansicht entlang einer Linie IV-IV in den Figuren 2 und 3 in einer ersten Ausführungsform,

Fig. 4b    eine schematische Querschnittsansicht entlang einer Linie IV-IV in den Figuren 2 und 3 in einer zweiten Ausführungsform, und

Fig. 5    ein schematisches Ablaufdiagramm eines Verfahrens.

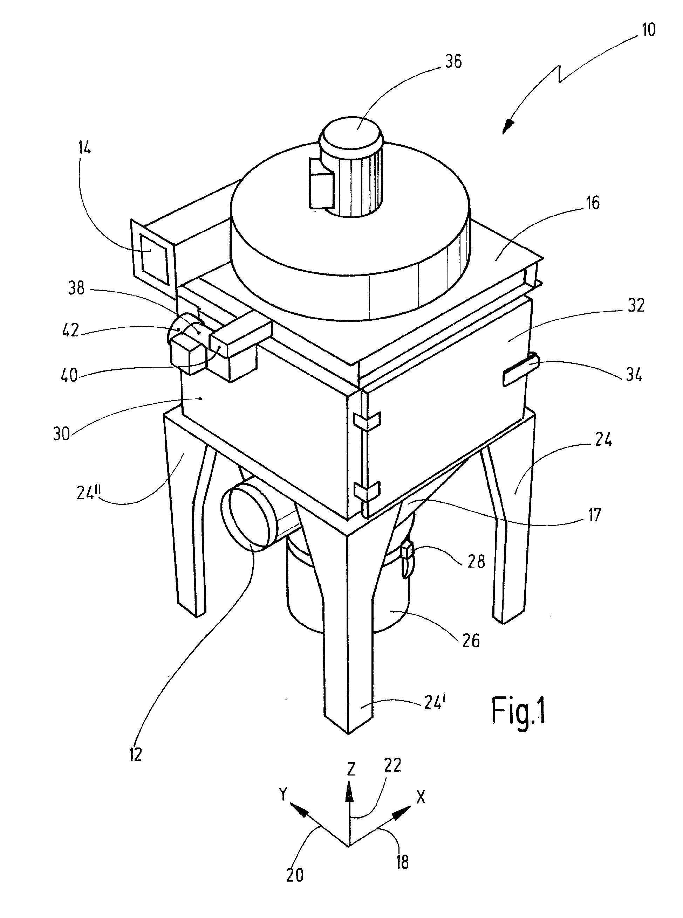

Fig. 1 zeigt eine Abscheidungsvorrichtung 10 in einer beispielhaften Ausführungsform.

Die Abscheidungsvorrichtung 10 weist einen Einlass 12 für ein Fluid (in der Fig. 1 nicht dargestellt) auf, das mit Staub bzw. Feststoffpartikeln beladen ist, die in der Abscheidungsvorrichtung 10 abgeschieden werden sollen. Des Weiteren weist die Abscheidungsvorrichtung 10 einen Auslass 14 auf, durch den das Fluid die Abscheidungsvorrichtung 10 wieder verlässt. Durch den Einlass 12 tritt somit das mit Staub beladene Fluid, das so genannte "Rohgas" ein. Durch den Auslass 14 tritt das gereinigte Fluid, das so genannte "Reingas" wieder aus.

Die Abscheidungsvorrichtung 10 weist ein Gehäuse 16 auf, das die innerhalb der Abscheidungsvorrichtung 10 angeordneten Elemente des Abscheidungsvorgangs umgibt. In einem unteren Bereich weist das Gehäuse 16 einen Trichter 17 auf. Auf die Ausgestaltung der Abscheidungsvorrichtung 10 innerhalb des Gehäuses 16 wird im Folgenden noch detailliert eingegangen.

Zur Orientierung ist ein X-Y-Z-Koordinatensystem dargestellt. Eine X-Achse ist mit dem Bezugszeichen 18, eine Y-Achse mit dem Bezugszeichen 20 und eine Z-Achse mit dem Bezugszeichen 22 bezeichnet. In der dargestellten Abscheidungsvorrichtung 10 verläuft die Z-Achse 22 in vertikaler Richtung.

Die Abscheidungsvorrichtung 10 weist Füße 24, 24', 24" auf, auf denen die Abscheidungsvorrichtung 10 aufgestellt ist. Diese umgeben einen unteren Bereich der Abscheidungsvorrichtung 10, in dem ein Staubkübel 26 angeordnet ist. In dem Staubkübel 26 sammeln sich Feststoffpartikel, die im Rahmen einer Vorabscheidung aus dem Fluid abgeschieden wurden, wie im Folgenden noch erläutert wird. Der Staubkübel 26 ist manuell entfernbar, beispielsweise kann er mittels eines Griffelements 28 von der Abscheidungsvorrichtung 10 entkoppelt und entleert werden.

Die Abscheidungsvorrichtung 10 weist des Weiteren einen Mittelbau 30 auf, in dem eine Wartungsklappe 32 angeordnet ist. Die Wartungsklappe 32 lässt sich mittels eines Hebelelements 34 öffnen und ermöglicht einen Zugriff auf ein Filterelement (in der Fig. 1 nicht dargestellt) der Abscheidungsvorrichtung 10. Durch Öffnen der Wartungsklappe 32 ist es möglich, den Innenraum des Gehäuses 16 zu überprüfen und eventuelle Wartungsarbeiten vorzunehmen.

An einer Oberseite der Abscheidungsvorrichtung 10 ist ein Ventilatormotor 36 angeordnet. Der Ventilatormotor 36 kann ein Gebläse bzw. einen Ventilator antreiben, der die Durchströmung des mit Feststoffpartikeln beladenen Fluids durch die Abscheidungsvorrichtung 10 gewährleistet. Des Weiteren ist eine Regelungseinrichtung 38 vorgesehen, wobei ein Bedienelement 40 vorgesehen sein kann, mit dem die Regelungseinrichtung überwacht und eingestellt werden kann. Beispielsweise kann vorgesehen sein, dass mittels des Bedienelements 40 bestimmte Schwellwerte für den Betrieb der Abscheidungsvorrichtung 10 eingegeben und vordefiniert werden können. Des Weiteren können Anschlüsse 42 vorgesehen sein, über die ein weiteres Fluid in das Gehäuse 16 eingeleitet werden kann oder von dem Filterelement abgesaugter Staub ausgeleitet werden kann.

Die Anordnung des Ventilatormotors 36, der Regelungseinrichtung 38, des Bedienelements 40 und der Anschluss 42 ist lediglich beispielhaft zu verstehen, selbstverständlich können auch andere geeignete Anordnungen bzw. Anschlusspunkte gewählt werden.

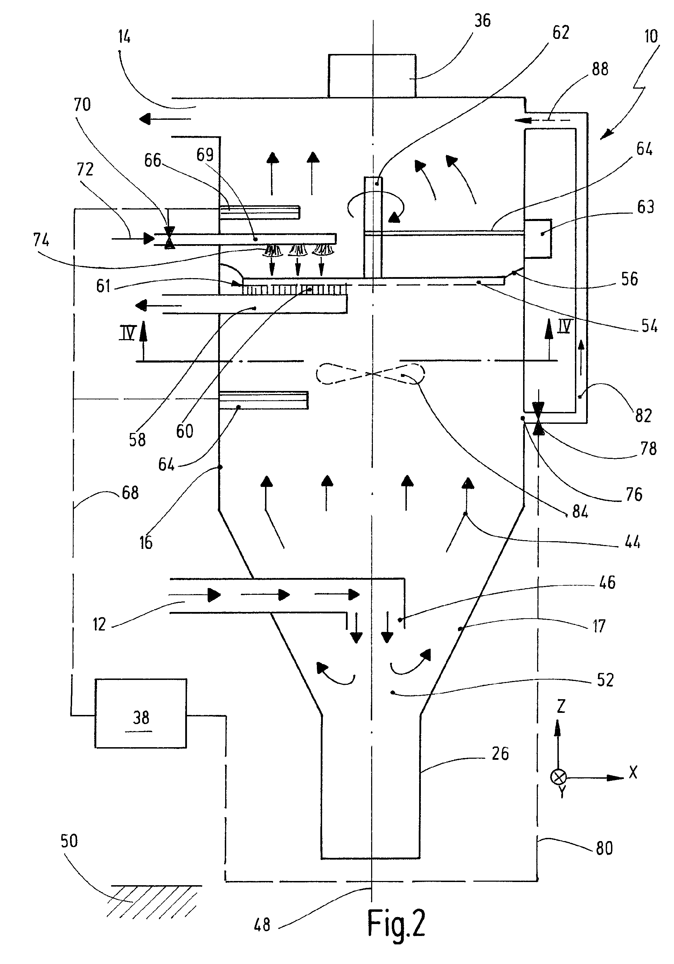

Fig. 2 zeigt eine schematische Querschnittsansicht der Abscheidungsvorrichtung in Fig. 1. Gleiche Elemente sind mit den gleichen Bezugszeichen gekennzeichnet, im Folgenden wird lediglich auf die weiteren Elemente eingegangen.

Ein Fluid 44, das in der schematischen Darstellung mittels geeigneter Pfeile angedeutet ist, tritt durch den Einlass 12 in das Gehäuse 16 ein und wird aus einer Einlassöffnung 46 in das Gehäuse 16 geleitet. Das Gehäuse 16 verläuft entlang einer Längsachse 48. Die Längsachse 48 ist in vertikaler Richtung bezüglich eines Bodens 50 ausgerichtet, das heißt parallel zu der Z-Achse.

Das Fluid 44 tritt somit in negativer Z-Richtung, das heißt "nach unten", in das Gehäuse 16 in einen Umlenkungsabschnitt 52 ein.

Eine Durchströmung eines Filterelements 54 erfolgt jedoch in positiver Z-Richtung, das heißt "nach oben". Daher wird in dem Umlenkungsabschnitt 52 eine 180°-Umlenkung des Fluids 44 erzwungen. Aufgrund der auf die in dem Fluid 44 vorhandenen Feststoffpartikel wirkenden Trägheitskräfte findet in dem Umlenkungsabschnitt 52 bereits eine Vorabscheidung statt. Die so abgeschiedenen Feststoffpartikel sammeln sich in dem Staubkübel 26. Der Staubkübel 26 schließt sich unmittelbar an den Umlenkungsabschnitt 52 an.

Das Filterelement 54 erstreckt sich in der dargestellten Ausführungsform senkrecht zu der Längsachse 48. Gegenüber dem Gehäuse 16 ist das Filterelement 54 mittels einer geeigneten Blende bzw. einem geeigneten Dichtungselement 56 abgedichtet. Derartige Dichtungselemente 56, um das rotierende Filterelement 54 gegenüber dem feststehenden Gehäuse 16 abzudichten, sind grundsätzlich bekannt, vorzugsweise werden etwa geeignete Filzelemente verwendet, um eine geeignete Abdichtung herzustellen.

Bei dem Filterelement 54 handelt es sich um ein geeignetes Filterelement zum Abscheiden der Feststoffpartikel aus dem Fluid 44. Beispielsweise kann es ein im Rahmen eines Sinterverfahrens hergestelltes, mehrlagig aufgebautes Metallfilterelement sein. Das Gehäuse 16 der Abscheidungsvorrichtung 10 kann vollständig thermisch isoliert sein. Der Trichter 17 kann mit einer Heizung, insbesondere einer Bunkerheizung, ausgeführt sein, um das Fluid 44 in dem Umlenkungsabschnitt 52 zumindest teilweise trocken zu halten und Anbackungen an dem Trichter 17, sowie auch an dem Filterelement 54, zu vermeiden. Auf diese Weise wird insbesondere ein Herabfallen der Feststoffpartikel an dem Trichter 17 in den Staubkübel 26 verbessert, da Anbackungen an dem Trichter 17 vermieden werden.

Stromaufwärts des Filterelements 54 kann in der in Fig. 2 dargestellten Ausführungsformen des Weiteren grundsätzlich ein Ventilatorelement (nicht dargestellt) vorgesehen sein, um als Fluidpumpe zum Pumpen des Fluids 44 zu dienen.

Stromaufwärts des Filterelements 54 ist eine Absaugeinrichtung 58 angeordnet, die dazu in der Lage ist, die in dem Filterelement 54 verfangenen Feststoffpartikel abzusaugen. Da das Fluid bei der Durchströmung der Abscheidungsvorrichtung 10 teilweise in eine flüssige Phase übertreten kann, können sich auf der stromaufwärts gelegenen Seite des Filterelements 54 Anbackungen der Feststoffpartikel bilden. Daher ist ein Bürstenelement 60 vorgesehen, das fest mit der Absaugeinrichtung 58 verbunden ist. Das Bürstenelement weist ein freies Ende 61 auf, das auf dem Filterelement 54 aufliegt.

Das Filterelement 54 ist auf einer Welle 62 gelagert, die von einem Filtermotor 63 über ein Kettenelement 64 angetrieben wird. Das Filterelement 54 wird an der ortsfesten Absaugeinrichtung 58 vorbeibewegt, so dass nach einer vollständigen Umdrehung des Filterelements 54 die gesamte Strömungsquerschnittsfläche des Filterelements 54 die Absaugeinrichtung 58 passiert hat und vollständig abgesaugt wurde. Des Weiteren wird durch das Entlangstreichen des Bürstenelements 60 auf der stromaufwärts gelegenen Oberfläche des Filterelements 54 ein zusätzliches mechanisches Reinigen der stromaufwärts gelegenen Oberfläche des Filterelements 54 bereitgestellt und dort eventuell vorhandene Anbackungen gelöst bzw. beseitigt.

Des Weiteren weist die Abscheidungsvorrichtung einen stromaufwärts des Filterelements 54 gelegenen ersten Sensor 65 und einen stromabwärts des Filterelements 54 gelegenen zweiten Sensor 66 auf, die ein Sensorsystem 65, 66 bilden. Die dargestellten Sensorelemente ragen in üblicher Weise senkrecht zu einer Strömungsrichtung des Fluids 44 in das Gehäuse 16 hinein, so dass sie dazu in der Lage sind, den statischen Druck an ihrer jeweiligen Position zu erfassen. Der erste Sensor 65 und der zweite Sensor 66 können aber auch lediglich als Bohrungen in dem Gehäuse 16 ausgeführt sein. Alternativ kann beispielsweise auch vorgesehen sein, dass der erste Sensor 65 und der zweite Sensor 66 als Prandtl-Sonden ausgebildet sind, die neben dem statischen Druck auch dazu in der Lage sind, einen Staudruck des Fluids 44 zu ermitteln und so neben dem statischen Druck auch eine Geschwindigkeit des Fluids an dem entsprechenden Ort zu bestimmen.

Aus den mit dem ersten Sensor 65 und dem zweiten Sensor 66 gemessenen statischen Drücken kann eine Druckdifferenz bzw. ein Druckverlust über das Filterelement 54 ermittelt werden. Diese Druckdifferenz kann über eine Kommunikationsleitung 68 an die Regelungseinrichtung 38 übertragen werden. Die Kommunikationsleitung 68 kann auf jede erdenkliche Art und Weise kabelgebunden oder kabellos ausgestaltet sein. Es können einzelne Verbindungen zu jedem der Sensorelemente 65, 66 hergestellt sein, es können aber auch Parallel- oder Busverbindungen bereitgestellt sein. Die Kommunikationsleitung 68 kann auch zumindest teilweise in Form von pneumatischen Leitungen ausgebildet sein, die die gemessenen Drücke an mindestens eine in Kommunikation mit der Regelungseinrichtung 38 stehende Druckdose übertragen.

Die Regelungseinrichtung 38 ist über die Kommunikationsleitung 68 des Weiteren mit einem Düsenelement 69 verbunden und dazu in der Lage, eine Düsenventil 70 zu steuern, das den Einlass eines weiteren Fluids 72 in das Düsenelement 69 öffnet bzw. schließt. Ist das Düsenventil 70 geöffnet, strömt das weitere Fluid, bei dem es sich beispielsweise um Umgebungsluft handeln kann, entgegengesetzt zu einer Strömungsrichtung des Fluids 44 in das Gehäuse 16 ein, durchströmt das Filterelement 54 und strömt in die Absaugeinrichtung 58. Das Düsenelement 69 ist bezüglich des Filterelements 54 gegenüber der Absaugeinrichtung 58 angeordnet.

Das Düsenelement 69 weist in der dargestellten Ausführungsform drei Düsenöffnungen 74 auf, es kann jedoch jede geeignete Anzahl von Düsenöffnungen 74 vorgesehen sein. Auch ihre Form kann auf jede geeignete Weise gewählt sein, beispielsweise kann es sich um kreisförmige Öffnungen oder aber auch um Schlitzdüsen handeln.

Des Weiteren ist eine Bypass-Öffnung 76 in dem Gehäuse 16 stromaufwärts des Filterelements 54 vorgesehen. Die Bypass-Öffnung 76 kann mittels eines Bypass-Ventils 78 geöffnet bzw. geschlossen werden. Das Bypass-Ventil 78 kann ebenfalls mit der Regelungseinrichtung 38 über eine Kommunikationsleitung 80 verbunden. Wie auch die Kommunikationsleitung 68 kann die Kommunikationsleitung 80 auf jede geeignete Art und Weise, beispielsweise kabellos oder kabelgebunden, bereitgestellt sein. Alternativ kann das Bypass-Ventil 78 durch eine Federkraft eines Federelements geschlossen gehalten werden, so dass sich das Bypass-Ventil 78 bei einer ausreichenden Druckdifferenz zwischen dem stromaufwärts des Filterelements 54 gelegenen Bereich, dem Rohgasbereich, und dem stromabwärts des Filterelements 54 gelegenen Bereich, dem Reingasbereich, automatisch öffnet und bei einem Abfallen dieser Druckdifferenz wieder automatisch schließt.

An die Bypass-Öffnung 76 kann sich in einer Ausgestaltung ein Bypass-Kanal 82 anschließen. Das durch die Bypass-Öffnung 76 geleitete Fluid tritt durch einen Kanalabschnitt 88 stromabwärts des Filterelements 54 wieder in das Gehäuse 16 ein. In der Abscheidungsvorrichtung 10 kann des Weiteren ein lediglich schematisch angedeutetes Ventilatorelement 82 angeordnet sein, um das Fluid 44 durch die Abscheidungsvorrichtung 10 zu pumpen. Das Ventilatorelement 82 wird dann von dem Ventilatormotor 36 angetrieben und ist mit diesem über eine geeignete Mechanik, beispielsweise eine zusätzliche Wellen und/oder Ketten bzw. Riemen, gekoppelt. Aus Übersichtsgründen ist die Mechanik nicht im Einzelnen dargestellt, ein solcher Aufbau ist dem Fachmann jedoch geläufig.

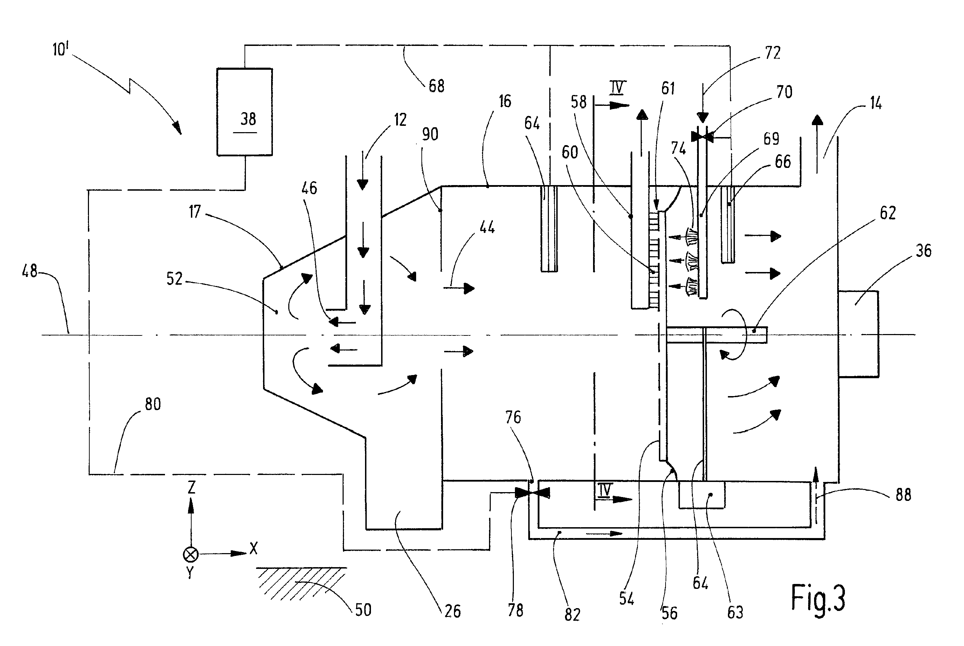

Die Fig. 3 zeigt eine schematische Querschnittsansicht einer weiteren Ausführungsform einer Abscheidungsvorrichtung 10'. Ähnliche Elemente zu der in der Fig. 2 dargestellten Ausführungsform sind mit gleichen Bezugszeichen gekennzeichnet und werden im Folgenden nicht weiter beschrieben. Im Folgenden wird lediglich auf die Unterschiede eingegangen.

Die Abscheidungsvorrichtung 10' ist mit ihrer Längsachse 48 horizontal zu einem Boden 50 ausgerichtet. Das heißt, die Längsachse 48 verläuft in diesem Fall parallel zu der X-Achse.

Der Betrieb der Abscheidungsvorrichtung 10' erfolgt wie in der mit Bezug auf Fig. 2 beschriebenen Art und Weise.

Die in der Fig. 3 dargestellte Abscheidungsvorrichtung 10' kann darüber hinaus eine Blende 90 aufweisen, die das Fluid 44 durchströmen muss. Die Blende 90 bildet einen Ausgang des Umlenkungsabschnitts 52. Die Blende 90 kann dabei helfen, eine bestimmte Strömungsrichtung des Fluids 44 in dem Umlenkungsabschnitt 52 zu erzwingen und das Vorabscheiden von Partikeln in den Staubkübel 26 zu verbessern. Insbesondere kann mittels der Blende 90 erzielt werden, dass die meisten der infolge der Trägheitskräfte vorabgeschiedenen und aufgrund der Gravitationskräfte herabsinkenden Partikel in dem Umlenkungsabschnitt 52 in den Staubkübel 26 herabsinken und nicht in dem übrigen Innenraum des Gehäuses 16 transportiert werden.

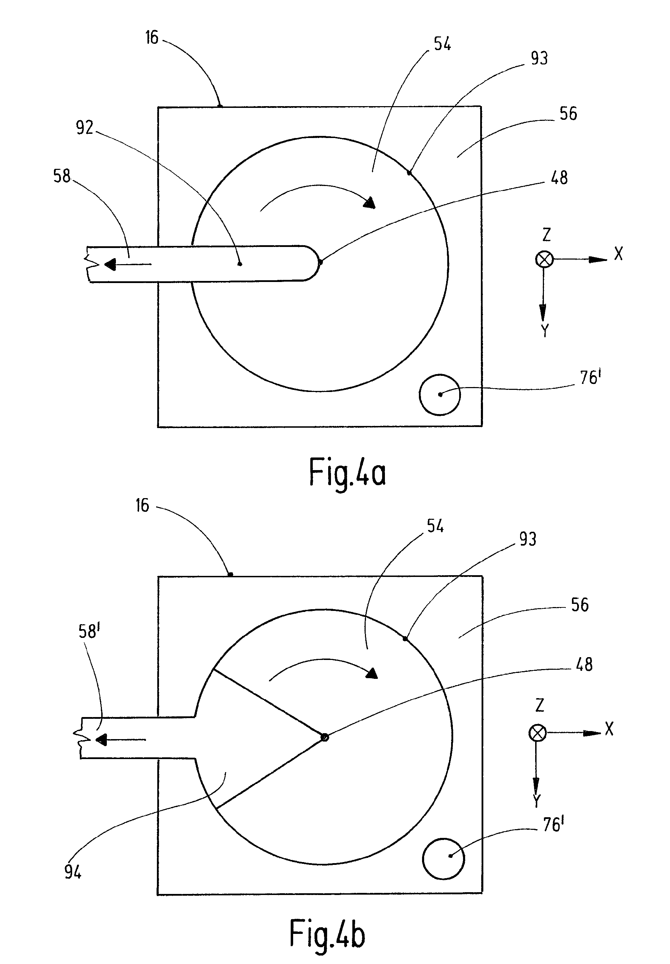

Die Fig. 4a zeigt eine erste Ausführungsform einer Querschnittsansicht entlang einer Linie IV-IV in den Figuren 2 und 3.

Das Gehäuse 16 ist im Querschnitt rechteckig ausgebildet, wobei das Filterelement 54 einen kreisförmigen Querschnitt aufweist. Die Absaugeinrichtung 58 ist in der dargestellten Querschnittsansicht in Form eines Stab- bzw. Rohrelements 92 ausgebildet. Das Filterelement 54 ist symmetrisch bezüglich der Längsachse 48 ausgebildet und rotiert um diese. Das rotierende Filterelement 54 ist gegenüber dem Dichtungselement 56 abgedichtet, ein Dichtungsrand 93 ist entsprechend ausgebildet, so dass eine geeignete Abdichtung zwischen dem rotierenden Filterelement 54 und dem feststehenden Dichtungselement 56 ausgebildet ist. Das Fluid 44 muss somit durch das im Strömungsquerschnitt kreisförmige Filterelement 54 hindurchtreten. Es verdeckt somit einen geringen Anteil des Strömungsquerschnitts des Filterelements 54. Die Absaugeinrichtung 58 erstreckt sich somit in einer radialen Richtung, das heißt in der X-Y-Ebene, und reicht im Wesentlichen bis an die Längsachse 48 heran. Hat das Filterelement 54 eine vollständige Umdrehung ausgeführt, wird somit die Strömungsquerschnittsfläche des Filterelements von der Absaugeinrichtung 58 vollständig abgesaugt.

Das Düsenelement 69 liegt stromabwärts des Filterelements 54 der Absaugeinrichtung 58 gegenüber. Es wird in der dargestellten Ansicht somit durch die Absaugeinrichtung 58 verdeckt, selbst wenn das Filterelement 54 nicht vorhanden wäre.

Des Weiteren ist eine alternative Anordnung einer Bypassöffnung 76' in dem Dichtungselement 56 dargestellt, die auch bevorzugt ausgeführt sein kann. Die Bypassöffnung 76' ist also nicht in dem Gehäuse, sondern in dem Dichtungselement 56 angeordnet. In diesem Fall ist auch kein Bypasskanal 82 notwendig. Insbesondere kann diese Ausführungsform das Bypassventil 78 als Federelement wie voranstehend beschrieben ausgeführt sein.

Die Fig. 4b zeigt eine alternative Ausführungsform. Gleiche Elemente sind mit gleichen Bezugszeichen wie in der Fig. 4a bezeichnet. Im Folgenden wird lediglich auf die Unterschiede eingegangen.

In der alternativen Ausführungsform ist eine Absaugeinrichtung 58' nicht als Stabelement 92, sondern als Flächenelement 94 ausgebildet, etwa in Form eines Kuchenstücks, das einen größeren Anteil der Strömungsquerschnittsfläche des Filterelements 54 bedeckt. Die flächige Ausgestaltung der Absaugeinrichtung 58' kann grundsätzlich beliebig ausgeführt sein. Entsprechend ist auch die flächige Ausgestaltung des Düsenelements 69 zu wählen. Die Ausgestaltung der Absaugeinrichtung 58' als Flächenelement 94 ermöglicht zwar ein großflächigeres und damit eventuell besseres Absaugen, natürlich bedeckt die Absaugeinrichtung 58' dadurch aber einen größeren Anteil der Strömungsquerschnittsfläche des Filterelements 54. Anwendungsspezifisch kann eine solche Ausgestaltung jedoch vorteilhaft sein.

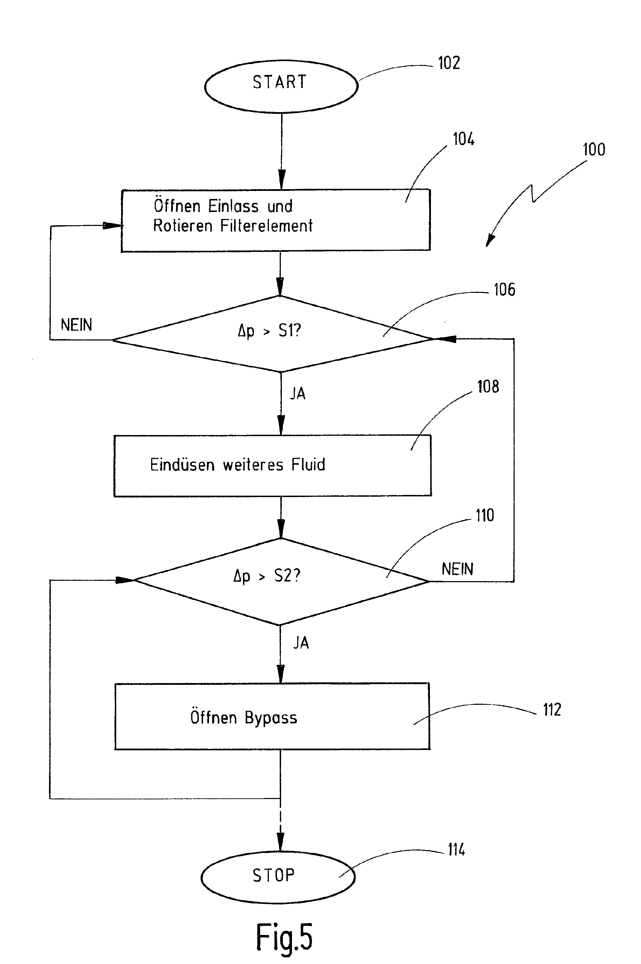

Die Fig. 5 zeigt ein Verfahren 100. Das Verfahren beginnt in einem Startschritt 102, in dem die Abscheidungsvorrichtung 10 eingeschaltet wird.

Zunächst folgt ein Betreiben der Abscheidungsvorrichtung 10 in einem Normalbetrieb 104. In diesem sind der Einlass 12 und Auslass 14 in normaler Art und Weise geöffnet und das Filterelement 54 rotiert. Mittels des ersten Sensors 65 und des zweiten Sensors 66 wird kontinuierlich in einem Schritt 106 abgefragt, ob ein in der Regelungseinrichtung 38 gespeicherter und vordefinierter Schwellwert S1 von der aus den mittels des ersten Sensors 65 und des zweiten Sensors 66 erfassten statischen Drücken hergestellten Druckdifferenz überschritten wird. Es wird also überwacht, ob ein Druckverlust über das Filterelement 54 den ersten Schwellwert S1 überschreitet. Ist dies nicht der Fall, verbleibt die Abscheidungsvorrichtung 10 in dem Normalbetrieb im Schritt 104. Ist dies der Fall, wird in einem Schritt 108 das weitere Fluid 72 mittels des Düsenelements 69 eingedüst. Die Eindüsung kann beispielsweise intermittierend über Zeitrelais zugeschaltet werden.

In einem Schritt 110 wird weiter die Druckdifferenz bzw. der Druckverlust abgefragt und festgestellt, ob ein zweiter vordefinierter Schwellwert S2 überschritten wird. Ist dies nicht der Fall und wird auch der erste Schwellwert S1 nicht mehr überschritten, kehrt das Verfahren in den Normalbetrieb im Schritt 104 zurück. Wird der zweite Schwellwert S2 nicht überschritten, aber der erste Schwellwert S1 überschritten, so bleibt das Verfahren in dem Schritt 108, in dem das weitere Fluid eingedüst wird. In Ausgestaltungen kann vorgesehen sein, dass die Zeitdauer, über die das weitere Fluid eingedüst wird, erhöht wird, wenn über einen längeren Zeitraum die Druckdifferenz nicht abfällt. Es kann beispielsweise auch ein kontinuierliches Eindüsen des weiteren Fluids vorgesehen sein.

Wird in dem Schritt 110 erkannt, dass auch der zweite Schwellwert S2 überschritten wird, wird in einem Schritt 112 das Bypass-Ventil 78 geöffnet, entweder automatisch durch Nachgeben eines Federelements des Bypassventils 78 oder gesteuert von der Regelungseinrichtung 38. Das Rohgas kann über die Bypass-Öffnung 76 ausströmen und die Druckdifferenz so verringert werden. Dies kann so lange erfolgen, bis der zweite Schwellwert nicht mehr überschritten wird. Das Bypass-Ventil 78 kann dann wieder geschlossen werden.

In einer weiteren Ausgestaltung kann vorgesehen sein, dass, selbst wenn nach Öffnen des Bypass-Ventils 78 kein Abfallen der Druckdifferenz unter den zweiten Schwellwert erzielt werden kann, ein Notstop 114 eingeleitet wird. Dieser kann entweder automatisch von der Regelungseinrichtung 38 geschaltet werden oder aber auch manuell auslösbar sein. In diesem Fall kann vorgesehen sein, den Einlass 12 zu schließen und/oder eine gesamte mit der Abscheidungsvorrichtung 10 verbundene Verbrennungsanlage herunterzufahren.

**Patentansprüche**

1.  Abscheidungsvorrichtung (10) zum Abscheiden von Staub aus einem Fluid (44), mit einem Gehäuse (16), das einen stromaufwärts gelegenen Einlass (12) und einen stromabwärts gelegenen Auslass (14) für das Fluid (44) aufweist, einem Filterelement (54), das in dem Gehäuse (16) derart angeordnet ist, dass das von dem Einlass (12) zu dem Auslass (14) strömende Fluid (44) das Filterelement (54) durchströmt, **dadurch gekennzeichnet, dass** das Filterelement (54) als metallisches Sieb ausgebildet ist, und die Abscheidungsvorrichtung (10) des Weiteren eine stromaufwärts des Filterelements (54) angeordnete Absaugeinrichtung (58) zum Absaugen von Staub von dem Filterelement (54) aufweist, wobei das Filterelement (54) und die Absaugeinrichtung (58) relativ zueinander bewegbar in dem Gehäuse (16) angeordnet sind.

2.  Abscheidungsvorrichtung nach Anspruch 1, **dadurch gekennzeichnet, dass** sich das Gehäuse (16) entlang einer Längsachse (48) erstreckt, wobei das Filterelement (54) die Form einer kreisförmigen Scheibe aufweist und sich quer zu der Längsachse (48) erstreckt, wobei das Fluid (44) das Filterelement (54) parallel zu der Längsachse (48) durchströmt, und wobei die Absaugeinrichtung (58) die Form eines sich quer zur Längsachse (48) erstreckenden Rohres aufweist.

3.  Abscheidungsvorrichtung nach Anspruch 1 oder 2, **dadurch gekennzeichnet**, sich das Gehäuse (16) entlang einer Längsachse (48) erstreckt, wobei das Fluid (44) das Filterelement (54) parallel zu der Längsachse (48) durchströmt, und dass die Absaugeinrichtung (58) ortsfest angeordnet ist, wobei das Filterelement (54) um die Längsachse (48) rotierbar gelagert ist.

4.  Abscheidungsvorrichtung nach einem der Ansprüche 1 bis 3, **dadurch gekennzeichnet, dass** die Absaugeinrichtung (58) des Weiteren ein an der Absaugeinrichtung (58) befestigtes Bürstenelement (60) mit einem freien Ende (61) aufweist, wobei das freie Ende (61) des Bürstenelements (60) auf dem Filterelement (54) aufliegt.

5.  Abscheidungsvorrichtung nach einem der Ansprüche 1 bis 3, **dadurch gekennzeichnet, dass** stromabwärts des Filterelements (54) und gegenüberliegend der Absaugeinrichtung (58) ein Düsenelement (69) zum Düsen eines weiteren Fluids (72) durch das Filterelement (54) in Richtung der Absaugeinrichtung (58) angeordnet ist.

6. Abscheidungsvorrichtung nach einem der Ansprüche 1 bis 4, **dadurch gekennzeichnet, dass** die Abscheidungsvorrichtung (10) ein Sensorsystem (65, 66) zur Bestimmung einer Druckdifferenz aufweist, das einen ersten Sensor (65) zur Bestimmung eines statischen Drucks stromaufwärts des Filterelements (54) und einen zweiten Sensor (66) zur Bestimmung eines statischen Drucks stromabwärts des Filterelements (54) aufweist.

7. Abscheidungsvorrichtung nach den Ansprüchen 5 und 6, **dadurch gekennzeichnet, dass** die Abscheidungsvorrichtung (10) des Weiteren eine Regelungseinrichtung (38) aufweist, die derart ausgebildet ist, dass sie bei Überschreitung eines vordefinierten ersten Schwellwerts für die Druckdifferenz das weitere Fluid (72) mittels des Düsenelements (69) durch das Filterelement (54) düst.

8. Abscheidungsvorrichtung nach Anspruch 7, **dadurch gekennzeichnet, dass** die Regelungseinrichtung (38) derart ausgebildet, dass sie das weitere Fluid (72) gepulst mittels des Düsenelements (69) durch das Filterelement (54) düst.

9. Abscheidungsvorrichtung nach einem der Ansprüche 1 bis 8, **dadurch gekennzeichnet, dass** sich an den Einlass (12) ein Umlenkungsabschnitt (52) anschließt, der derart ausgebildet ist, dass er eine Richtungsänderung des ihn durchströmenden Fluids (44) erzwingt, und dass sich ein entfernbarer Staubkübel (26) an den Umlenkungsabschnitt (52) anschließt.

10. Abscheidungsvorrichtung nach Anspruch 9, **dadurch gekennzeichnet, dass** die Richtungsänderung 180° beträgt, wobei eine Richtung, in der das Fluid (44) aus dem Einlass (12) in das Gehäuse (16) einströmt, entgegengesetzt zu einer Richtung verläuft, in der das Fluid (44) durch das Filterelement (54) strömt.

11. Abscheidungsvorrichtung nach einem der Ansprüche 1 bis 10, **dadurch gekennzeichnet, dass** die Abscheidungsvorrichtung (10) eine stromaufwärts des Filterelements (54) angeordnete Bypassöffnung (76) aufweist.

12. Abscheidungsvorrichtung nach den Ansprüchen 6 und 11, **dadurch gekennzeichnet, dass** die Abscheidungsvorrichtung (10) eine Regelungseinrichtung (38) aufweist, die die Bypassöffnung (76) bei Überschreitung eines vordefinierten zweiten Schwellwerts für die Druckdifferenz öffnet.

13. Abscheidungsvorrichtung nach einem der Ansprüche 1 bis 12, **dadurch gekennzeichnet, dass** die Abscheidungsvorrichtung (10) derart ausgebildet ist, dass das Fluid (44) das Filterelement (54) während des Betriebs in vertikaler Richtung durchströmt.

14. Verfahren zum Abscheiden von Staub aus einem Fluid (44), bei dem das Fluid (44) von einem stromaufwärts gelegenen Einlass (12) eines Gehäuses (16) einer Abscheidungsvorrichtung (10) zu einem stromabwärts gelegenen Auslass (14) unter Durchströmung eines Filterelements (54) strömt, **dadurch gekennzeichnet, dass** sich eine stromaufwärts des Filterelements (54) angeordnete Absaugeinrichtung (58) und das Filterelement (54) relativ zueinander bewegen, wobei die Absaugeinrichtung (58) den Staub von dem Filterelement (54) absaugt.

15. Verfahren nach Anspruch 14, **dadurch gekennzeichnet, dass** mittels eines Sensorsystems (65, 66) eine Druckdifferenz zwischen einem statischen Druck stromaufwärts des Filterelements (54) und einem statischen Druck stromabwärts des Filterelements (54) bestimmt wird, und dass mittels eines stromabwärts des Filterelements (54) und gegenüberliegend der Absaugeinrichtung (58) angeordneten Düsenelements (69) ein weiteres Fluid (72) durch das Filterelement (54) in Richtung der Absaugeinrichtung (58) gedüst wird, wenn die Druckdifferenz einen vordefinierten ersten Schwellwert überschreitet.

Fig.1

Fig.2

Fig.3

EP 2 527 025 A1

Fig.4a

Fig.4b

START — 102

Öffnen Einlass und Rotieren Filterelement — 104

100

Δp > S1? — 106

NEIN

JA

Eindüsen weiteres Fluid — 108

Δp > S2? — 110

NEIN

JA

Öffnen Bypass — 112

STOP — 114

Fig.5

Europäisches
Patentamt

European
Patent Office

Office européen
des brevets

**EUROPÄISCHER RECHERCHENBERICHT**

**Nummer der Anmeldung**

EP 12 16 9632

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 044 106 A1 (FERRI HANS) 20. Januar 1982 (1982-01-20) * Zusammenfassung; Abbildungen 1,2 * * Seite 6, Zeile 18 - Seite 7, Zeile 4 * * Seite 7, Zeilen 25-27 * ----- | 1-3,8,14 | INV. B01D46/10 B01D46/00 |
| X | DE 738 349 C (FRANZ STIPERNITZ DR ING) 12. August 1943 (1943-08-12) * Seite 1, Zeilen 18-22 * * Seite 2, Zeilen 6-25; Abbildungen 1,2 * ----- | 1,5,13, 14 | |
| X | US 4 277 264 A (BUCHHOLZ KENNETH M ET AL) 7. Juli 1981 (1981-07-07) * Zusammenfassung; Abbildungen 2,3,8 * * Spalte 6, Zeilen 4-44 * ----- | 1,6,7,9, 10,13-15 | |
| X | US 2008/011440 A1 (RAJANUMMI KIMMO [FI] ET AL) 17. Januar 2008 (2008-01-17) * Zusammenfassung; Abbildungen 3,4 * * Absatz [0052] * ----- | 1,4,14 | |
| X | DE 38 30 991 A1 (LTG LUFTTECHNISCHE GMBH [DE]) 23. März 1989 (1989-03-23) * Spalte 6, Zeilen 57-63 * * Zusammenfassung; Abbildungen 1-8 * ----- | 1,6,14 | RECHERCHIERTE SACHGEBIETE (IPC) B01D |
| X | DE 11 53 600 B (KRANTZ H FA) 29. August 1963 (1963-08-29) * Abbildungen 1,2 * ----- | 1-3,5,14 | |

Der vorliegende Recherchenbericht wurde für alle Patentansprüche erstellt

| Recherchenort | Abschlußdatum der Recherche | Prüfer |
|---|---|---|
| München | 31. Juli 2012 | Sembritzki, Thorsten |

KATEGORIE DER GENANNTEN DOKUMENTE

X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
     nach dem Anmeldedatum veröffentlicht worden ist
D : in der Anmeldung angeführtes Dokument
L : aus anderen Gründen angeführtes Dokument

..................................................................................
& : Mitglied der gleichen Patentfamilie, übereinstimmendes
     Dokument

EPO FORM 1503 03.82 (P04C03)

# EP 2 527 025 A1

**ANHANG ZUM EUROPÄISCHEN RECHERCHENBERICHT**
**ÜBER DIE EUROPÄISCHE PATENTANMELDUNG NR.**   EP 12 16 9632

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-07-2012

| Im Recherchenbericht angeführtes Patentdokument | | Datum der Veröffentlichung | Mitglied(er) der Patentfamilie | | | Datum der Veröffentlichung |
|---|---|---|---|---|---|---|
| EP 0044106 | A1 | 20-01-1982 | DE | 3166172 | D1 | 25-10-1984 |
| | | | EP | 0044106 | A1 | 20-01-1982 |
| DE 738349 | C | 12-08-1943 | KEINE | | | |
| US 4277264 | A | 07-07-1981 | KEINE | | | |
| US 2008011440 | A1 | 17-01-2008 | BR | PI0512257 | A | 19-02-2008 |
| | | | CA | 2568840 | A1 | 29-12-2005 |
| | | | CN | 1969086 | A | 23-05-2007 |
| | | | EP | 1759055 | A1 | 07-03-2007 |
| | | | EP | 2333152 | A1 | 15-06-2011 |
| | | | FI | 6403 | U1 | 30-09-2004 |
| | | | RU | 77284 | U1 | 20-10-2008 |
| | | | US | 2008011440 | A1 | 17-01-2008 |
| | | | WO | 2005124017 | A1 | 29-12-2005 |
| DE 3830991 | A1 | 23-03-1989 | KEINE | | | |
| DE 1153600 | B | 29-08-1963 | KEINE | | | |

EPO FORM P0461

Für nähere Einzelheiten zu diesem Anhang : siehe Amtsblatt des Europäischen Patentamts, Nr.12/82